# EUROPEAN PATENT SPECIFICATION

(11) **EP 1 506 935 B1**
(45) Date of publication and mention of the grant of the patent: **30.04.2008**
(21) Application number: 03292260.1
(22) Date of filing: 12.09.2003
(51) Int. Cl.: B67D 3/00

(54) **Bottled water dispenser with air inlet valve**
Wasserspender mit Lufteinlassventil
Distributeur d'eau embouteillée avec vanne d'alimentation en air

(30) Priority: 11.08.2003 KR 2003055469
(43) Date of publication of application: 16.02.2005
(73) Proprietor: Young One Corporation, Pyongtaek-si, Gyeonggi-do (KR)
(72) Inventor: Chang, Seouk Eun, Wonmi-gu Boocheon-si (KR)
(74) Representative: Pichat, Thierry

(56) References cited:
- US-A- 5 526 961
- US-A- 5 647 416
- US-A- 5 653 270
- US-A- 5 676 278
- US-A1- 2002 129 869
- US-B1- 6 167 921

## Description

### BACKGROUND OF THE INVENTION

### Field of the Invention

The present invention relates to a bottled water dispenser, and more particularly, to a sealing structure of a water flowing path in a bottled water dispenser. In particular, the present invention relates to a sealing structure of a bottled water dispenser with more reliability and lower manufacturing cost due to its improved shape of a filter connecting a water bottle to outside.

### Background of the Related Art

With urbanization and industrialization, environmental pollution has become an issue. With their economic affluence, modern people are more concerned about sanitation and health, and particularly about the drinking water.

As a sanitary remedy of the drinking water, bottled water dispensers have become popular these days to purify the running water.

Another available method is to capture high quality natural spring water and store in a bottle of a predetermine shape so that the water can be dispensed therefrom when wished by a user.

The present invention pertaining to a bottled water dispenser will describe the prior art in relation thereto.

Detailed description of the shape of a bottled water dispenser will be omitted here as it has already been well known. The general shape of the conventional bottled water dispensers had been suggested by their major manufacturers such as Elkay Manufacturing Company and Ebtech, Inc., etc., which have their main offices in the Sectioned States, in USP 5,413,152 and USP 5,222,541.

Further, in US-A-5 526 961 is described a bottled water dispenser, comprising:
a water bottle;
a storage tank connected to water outlets;
a supporting funnel for inserting a water bottle inside thereof;
an upper side water guide main body formed on a lower side of the supporting funnel;
an upper side water guide including a screw section, which is formed on a lower side of the main body;
a water storage tank mounting section being in contact with an upper tip of the water storage tank at an upper tip thereof for housing the upper side water guide main body inside thereof;
a lower side water guide main body formed on a lower side of the water storage tank mounting section;
a water shielding depression section formed by being penetrated from a predetermined position of the mounting section of the water storage tank for sucking air from outside;
a buoy integrated with an interfix inserted in the water shielding depression section;
a buoy fixture fixed and fitted by the interfix;
a lower side of the water guide including an external sealing member formed around an external periphery of the water storage tank mounting section for sealing the water storage tank and the water storage mounting section; and
a connector including a probe, which has a screw section positioned to correspond with the screw section of the upper side water guide so as to be fixed with the upper side water guide and elongated so that a cap of the water bottle can be opened,
a handle formed on a lower tip of the probe for compressing with an external force, and water outlets formed by the opened probe.

However, such a bottled water dispenser has the drawback that the water flowing out of a water bottle is frequently leaked from a plurality of connecting sections of the bottled water dispenser while being led to a faucet valve of the running water.

Further, in case where the water bottled is broken, the water is also leaked from an air inlet, which is provided to suck air into the space left by the water flown out of the water bottle. Such water leaking poses a user inconvenience of cleaning the office or room where a bottled water dispenser is installed. Moreover, the air inlet of a complex structure becomes a cause of increasing the manufacturing cost of a bottled water dispenser.

### Summary of the Invention

Accordingly, the present invention is directed to a bottled water dispenser that substantially obviates one or more problems due to limitations and disadvantages of the related art.

An object of the present invention is to provide a bottled water dispenser capable of shielding water leakage by improving the water flowing path therein.

Another object of the present invention is to provide in other bottled water dispenser capable of stably shielding water that might overflow an air inlet.

Another object of the present invention is to provide a bottled water dispenser, which achieved water shielding with a simpler structure and cheaper cost than the conventional ones.

Additional advantages, objects and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description as well as in the appended claims.

To achieve these objects and other advantages and in accordance with the purpose of the invention, as embodied and broadly described herein, the bottled water dispenser comprises the features of claim 1.

The structure as suggested by claim 1 has advantages of effectively shielding overflow of the water from inside of the bottled water dispenser to outside as well as of lowering the manufacturing cost.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a perspective view illustrating an external appearance of a bottled water dispenser according to the present invention;

FIG. 2 is an analytic perspective view illustrating a water flowing path structure in the bottled water dispenser according to the present invention;

FIG. 3 is a cross-sectional view of an air inlet illustrating a cross section A-A' in FIG. 2;

FIG. 4 is an analytic perspective view illustrating the inlet according to the present invention;

FIG. 5 is a cross-sectional view of a connector illustrating a cross section B-B' in FIG. 2; and

FIG. 6 is a view illustrating a sealed portion of the bottled water dispenser according to the present invention.

### DETAILED DESCRIPTION OF THE PREFERRED EMBODIMENTS

Reference will now be made in detail to the preferred embodiments of the present invention, examples of which are illustrated in the accompanying drawings.

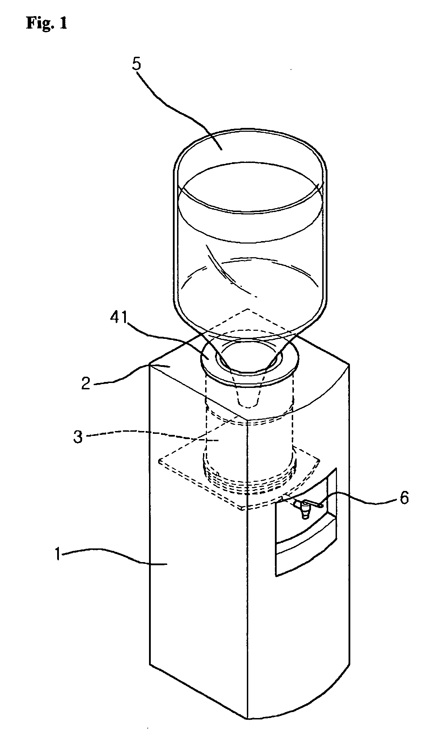

FIG. 1 is a perspective view illustrating an external appearance of a bottled water dispenser according to the present invention.

Referring to FIG. 1, the bottled water dispenser according to the present invention comprises a housing 1 of a rectangular pillar shape constituting an exterior of the bottled water dispenser, a cover plate 2 forming an upper side wall of the housing 1, a supporting funnel 41 inserted in a penetrating hole of a long diameter in the middle of the cover plate 2, a water bottle 5 having a beak inserted inside of the supporting funnel 41, and a water discharger 6 protruded forward of the bottled water dispenser for discharging water outside. Through FIG. 1 shows a single water outlet, generally two water outlets are separately provided for hot water and cold water.

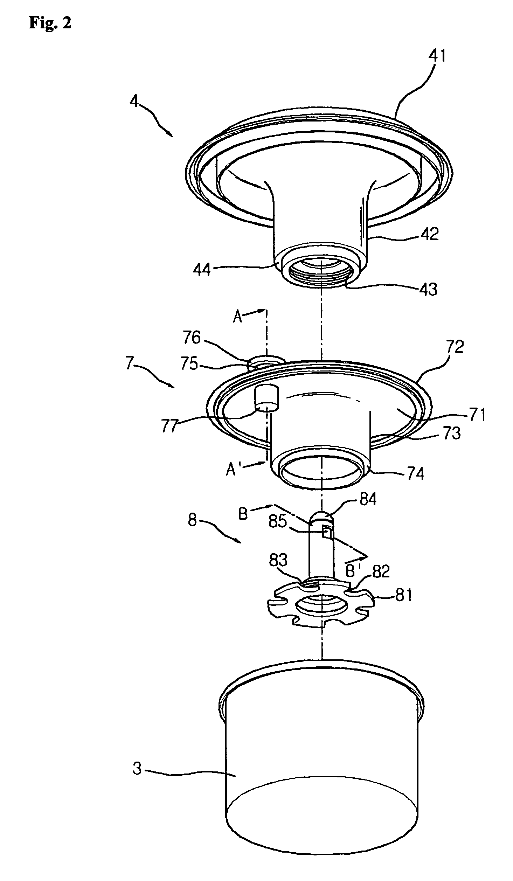

FIG. 2 is an analytic perspective view illustrating a water flowing path structure in the bottled water dispenser according to the present invention.

The water flowing path structure according to the present invention is formed inside of the housing 1 so as to be elongated downward of the supporting funnel 41 in FIG. 1.

Referring to FIG. 2, the water flowing path structure according to the present invention includes an upper side water guide 4, a lower side water guide 7, a connector 8, and a water storage tank 3.

A water cooling and/or heating structure(s) are/is formed at the flowing tip of the water storage tank 3. A water outlet 6 is formed at the tip of the water cooling and/or heating structure(s) so that the water can be available for drinking. The water cooling and/or heating structure(s) may be identical with or different from the conventional ones. However, description of its detailed construction will be omitted here, since it has no close relation with the concept of the present invention.

Specifically, the upper side water guide 4 includes the supporting funnel 41 for supporting self weight of the water bottle 5 laid thereon, an upper side water guide main body 42 of a cylindrical shape extended downward of the supporting funnel 41, a first suspending section 44 bent inward from a lower part of the upper side water guide main body 42, and a female screw section 43 formed on an inner surface of a cylindrical shape, which is further extended downward from an inner periphery of the first suspending section 44.

The lower side water guide 7 includes a water storage tank mounting section 71 of a circular frame shape laid on an upper side of the water storage tank 3, an external sealing member 72 inserted around external periphery of the water storage tank mounting section 71, a second suspending section 74 extended downward to the water storage tank mounting section 71 with a diameter shorter than that of the water storage tank mounting section 71 and becoming narrower at lower parts of a lower side water guide main body 73, which receives the upper side water guide main body 42 therein, so that the first suspending section 44 can be suspended with the lower side water guide main body 73, a valve housing 75 of a circular frame shape protruded upward at the water storage tank mounting section 71, a filter supporter 75 of an elastic material, which can be exemplified by rubber fitted around an upper tip of the valve housing 75, and a buoy 77 formed on a lower side of the valve housing 75.

The external sealing member 72, which is of a circular frame shape and of a silicon material, serves to prevent water from being in contact with an upper tip of the water storage tank 3 so as not to overflow. Since the compressing force of the water bottle 5 leads the water storage tank mounting section 71 to strongly compress the water storage tank 3, the external sealing member 72 compresses the surface of the water storage tank 3, which is in contact with the water storage tank mounting section 71, with a stronger force. As a consequence, sealing can be performed with a stronger force.

The connector 8 includes a handle 81 having a plurality of protrusions around periphery thereof for easy grapping, a probe 81 hollowed in an upper part of the handle 81, a male screw section 83 formed around an external periphery of a lower part of the probe 84, an internal sealing member 82 of an elastic material exemplified by rubber, which is formed on an upper surface of the handle 81, and water outlets 85 formed on upper parts of the probe 84 so as to be connected to a hollow portion thereof.

The probe 84 is tapered to have narrower diameters around upper parts thereof. As a consequence, water is not leaked when the water bottle 5 is fitted.

The male screw section 83 is coupled with the female screw section 43 so that the upper side water guide 4 can be compressed with the connector 8 with a strong force. Once the upper side water guide 4 is compressed with the connector 8, the lower side water guide 7 is also compressed with the connector 8 due to suspensions on the first and the second suspension sections 44, 74. Because of such force, the internal sealing member 82 is strongly compressed with the handle 81 and a lower surface of the water guides 4, 7. No water is leaked between the handle 81 and the water guides 4, 7.

Two or more water outlets 85 are formed around external periphery of the probe 84 so as to face each other or at regular intervals. Water is discharged from the water bottle 5 through the water outlet 85 so as to be supplied to the water storage tank 3.

The water flow passing through the above water path structure will now be described.

The water passing the water bottle 5 flows down along an internal hole of the probe 84 through the water outlets 85. Here, the inner peripheral surface of the water flow exit of the water bottle 5 is firmly stuck to an external periphery surface of the probe 84 due to self weight of the water bottle 5, thereby preventing water from being discharged.

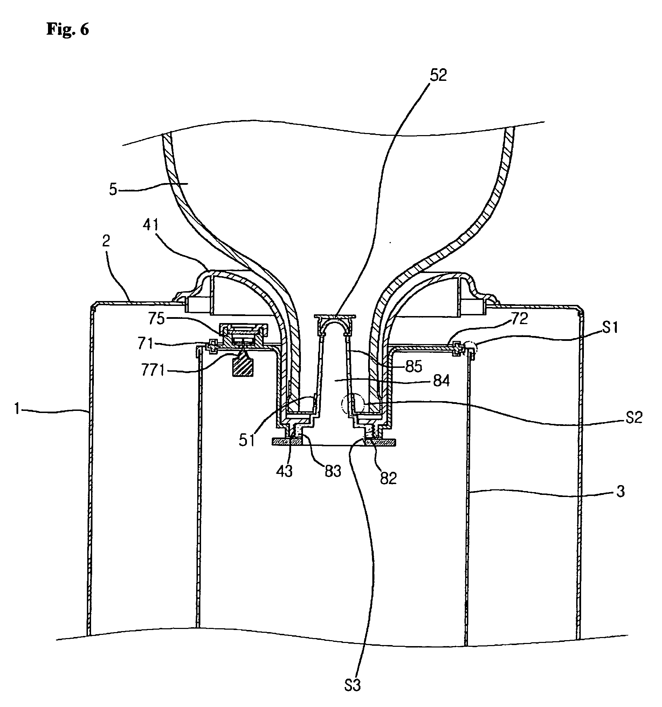

To be specific, taper is formed around the external periphery of the probe 84, which is firmly stuck to a sealed outlet formed at an entrance of the water bottle 5 (Refer to the drawing reference numeral 51 in FIG. 6.). Accordingly, water can be discharged through the water outlet 85 only, not through the gap between the sealed outlet of the water bottle and the probe 84.

The sealed outlet of the water bottle 5 is integrated with a cover of the water bottle 5 (Refer to the drawing reference numeral 52 I FIG. 6.) When the water bottle 5 is seated, however, the sealed outlet of the water bottle 5 is separated from the cover of the water bottle 5 by a pushing force of the probe 84. Also, the inner peripheral surface of the sealed outlet of the water bottle 5 is firmly stuck to an outer peripheral surface of the probe 84, thereby preventing water leakage and guaranteeing water shielding. The upper tip of the probe 84 is formed round so as to softly lift up the cover 52 of the water bottle 5.

The lower tip of the lower side water guide 7 is compressed with the internal sealing member 82 without any gap therebetween. As a consequence, no air can flow into the water storage tank 3 through the gap formed between the lower side water guide 7 and the upper side water guide 4.

The water flown inside of the water storage tank 3 through the water outlet 85 and the probe 84 is discharged to the water discharger connected to the water storage tank 3 (Refer to the drawing reference numeral 6 in FIG. 6.). Since the upper tip of the water storage tank 3 is firmly sealed with the water storage tank mounting section 71 by means of the external sealing member 72, the water flown into the water storage tank 3 can be discharged through the water outlet 6 only, not through any other gaps formed in the water path structure.

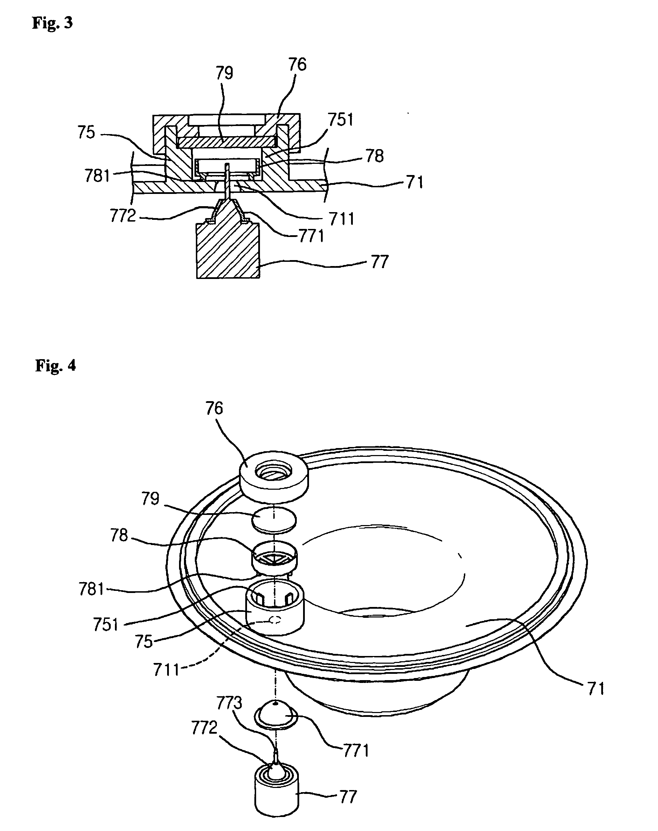

As much amount of air as the water discharged through the water storage tank 3 is filtered while passing an air filter formed inside of the valve housing 75 (Refer to the drawing reference numeral 79 in FIG. 3.) so as to flux inside the water storage tank 3.

FIG. 3 is a cross-sectional view of an air inlet illustrating a cross section A-A' in FIG. 2, and FIG. 4 is an analytic perspective view illustrating the inlet according to the present invention.

Referring to FIGs. 3 and 4, the water storage tank mounting section 71 comprises a water shielding depression section 711 penetrated at a predetermined position of the water storage tank mounting section 71 to be inclined, a valve housing 75 of a circular frame shape upwardly extended from the external periphery at a predetermined distance from the water shielding depression section 711, and a guide rib 751 vertically elongated around the predetermined periphery of the valve housing 75.

The water storage tank mounting section 71 further comprises an interfix 773 inserted in the water shielding depression section 711 and extended beyond an upper surface of the water storage tank mounting section 71, a buoy 77 formed on a lower side of the interfix 773 in a cylindrical shape, a water shielding protrusion section 772 protruded at a position where the interfix 773 and the buoy 77 cross each other, and a sealing section 771 formed on a upper side of the water shielding protrusion section 772. The water shielding protrusion section 772, which is of a symmetrical shape with the water shielding depression section 711, serves to prevent water from being leaked between the space generated when the buoy 77 moves upward. The water shielding depression section 711 and the water shielding protrusion section 772 are tapered to realize such sealing structure with reliability.

The interfix 773 is fitted onto the buoy fixture 78 after penetrating the water shielding depression section 711. For that purpose, a predetermined hole is formed in the middle of the buoy fixture 78, and a projection is formed slightly below an upper tip of the interfix 773 to have a shorter diameter for fixing the position of the inserted interfix 773. space maintaining protrusions 781 is formed on the buoy fixture 78 to maintain suitable space between the lower side of the buy fixture 78 and the valve housing 75. [50] An air filter 79 with micro pores, which can be exemplified by nonwoven fabric, is formed inside of the valve housing 75 so as to be supported by the rib guide 751 thereon. A filter supporter 76 is further formed to support an upper position of the air filter 79.

To summarize construction of the air inlet, the buoy 77 is fitted onto the buoy fixture 78 so as not to be fell down but to be suspended by the buoy fixture 78 due to self weight thereof. Since air can flow in from outside through the water shielding depression section 711, as much air as the amount discharged from the water storage tank 3 can be flown into the water storage tank 3.

In case where water is continuously filled in the water storage tank 3 due to breaking of the water bottle 5 or any other reasons, the buoy 77 is elevated. As a consequence, the water shielding protrusion section 772 tightly faces the water shielding depression section 711, thereby preventing water from being leaked. At that time, a soft sealing section 771 is located facially between the water shielding protrusion section 772 and the water shielding depression section 711 in order to seal the contacted face. The sealing section 771 can be made out of natural or synthetic resin, for example silicon, and the sealing section 771 can be elastically fitted on the outer surface of the water shielding protrusion section 772.

For stable performance of its function, the buoy 77 is preferably composed of a light plastic material. To improve its role, inside of the buoy 77 may be left vacant.

The filter supporter 76 has a groove of a predetermined shape around periphery thereof. The valve housing 75 is fitted into the groove so as to support position of the filter supporter 76. For that purpose, the filter supporter 76 is preferably composed of rubber of high elasticity.

The space allowable for the buoy 77 to move in a vertical direction may be a vertical length of the guide rib 751 or a distance movable by the buoy fixture 78 in a vertical direction.

To be specific, when the buoy 77 has fully moved down, it is the time when the buoy fixture 78 has moved downward to contact the water storage tank mounting section 71. When the buoy 77 has fully moved up, it is the time when the buoy fixture 78 has moved upward to contact the air filter 79 and when the water shielding protrusion section 772 tightly faces the water shielding depression section 711 so as to prevent water from being leaked therebetween.

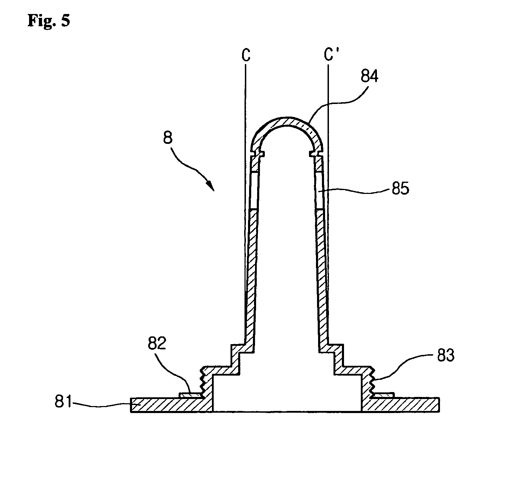

FIG. 5 is a cross-sectional view of a connector illustrating a cross section B-B' in FIG. 2.

Referring to FIG. 5, the connector 8 comprises a handle 81 having a plurality of protrusions around an external periphery thereof, a probe 84 extended to an upper side of the handle 81, a water outlet 85 formed in the main body of the probe 84, a male screw section 83 formed on a lower part of the probe 84, and an internal sealing member 82 formed on an upper surface of the handle 81 to be in contact with a lower tip of the lower side water guide 7 so as to perform sealing of water.

Referring to the auxiliary lines C-C', the probe 84 is tapered to have shorter diameters upward thereof. Such shape serves to completely seal the gap between the probe 84 and the sealed outlet 51 of the water bottle so as to prevent water from being leaked. The self weight of the water bottle 5 also pushes the sealed outlet 51 downward with a stronger force, thereby sealing the gap between the probe 84 and the sealed outlet 51 of the water bottle with a stronger force.

FIG. 6 is a view specifying a sealed portion of the bottled water dispenser according to the present invention.

Referring to FIG. 6, the external sealing member 72 is provided on a contacting surface between the water storage tank mounting section 71 and the water storage tank 3 to form a first sealing section S1, on which the contacting surface is firmly sealed by the self weight of the water bottle 5.

The external periphery of the probe 84 tapered to have shorter diameters upward is in contact with an inner peripheral surface of the sealed outlet 51 of the water bottle. The contact portion, which becomes narrower due to the strong force laid by the water bottle 5, forms a second sealing section S2.

The internal sealing member 82 further formed on an upper surface of the handle 81 in the connector 8 is imposed onto the contact portion between the lower tip of the lower side water guide 7 and the handle 81 so as to be strongly fastened by a fastening force of the female screw section 43 and the male screw section 83. As a consequence, imposition of the internal sealing member 82 forms a third sealing section S3. The female screw section 43 or the male screw section 83 may be mutually exchanged in their positions.

As described above, the water or air leaking structure is eliminated by the first, the second, and the third sealing sections S1, S2, S3 from the water flowing path between the water bottle 5 and the water storage tank 3. As a result, reliability of the bottled water dispenser is enhanced.

Moreover, as described above, even if air may be flown into the air inlet due to its structure including the buoy 77, water is not leaked through the air inlet. Thus, stability can be guaranteed for the bottled water dispenser.

The present invention has another advantage of shielding leakage of water or influx of air and completely sealing the bottled water dispenser in the course of the water flowing path thereof.

According to the present invention, even in case where a water bottle is broken, the water that may overflow the air inlet can be stably shielded. Furthermore, the air inlet structure can be achieved with a cheaper manufacturing cost.

The foregoing embodiments are merely exemplary and are not to be construed as limiting the present invention. The present teachings can be readily applied to other types of apparatuses. The description of the present invention is intended to be illustrative, and not to limit the scope of the claims. Many alternatives, modifications, and variations will be apparent to those skilled in the art.

## Claims

1. A bottled water dispenser, comprising:
a water bottle (5);
a storage tank (3) connected to water outlets (6,85);
a supporting funnel (41) for inserting a water bottle inside thereof;
an upper side water guide main body (42) formed on a lower side of the supporting funnel;
an upper side water guide (4) including a screw section (43, 83), which is formed on a lower side of the main body (73);
a water storage tank mounting section (71) being in contact with an upper tip of the water storage tank (3) at an upper tip thereof for housing the upper side water guide main body (42) inside thereof;
a lower side water guide main body formed on a lower side of the water storage tank mounting section (71);
a water shielding depression section (711) formed by being penetrated from a predetermined position of the mounting section of the water storage tank for sucking air from outside;
a buoy (77) integrated with an interfix (773) inserted in the water shielding depression section;
a buoy fixture (78) fixed and fitted by the interfix;
a lower side of the water guide (7) including an external sealing member (72) formed around an external periphery of the water storage tank mounting section (71) for sealing the water storage tank (3) and the water storage mounting section (71); and
a connector (8) including a probe (84), which has a screw section (43, 83) positioned to correspond with the screw section of the upper side water guide (4) so as to be fixed with the upper side water guide and elongated so that a cap of the water bottle (5) can be opened,
a handle (81) formed on a lower tip of the probe (81, 84) for compressing with an external force, and water outlets (6, 85) formed by the opened probe (84),
**characterized in that** it further comprises:
a valve housing (75) of a circular frame shape extended upward from the water storage tank mounting section (71) so that the buoy fixture (78) can be guided;
a guide rib (753.) elongated in a vertical direction on an inner peripheral surface of the valve housing (75); and
space maintaining protrusions formed on the buoy fixture (78) to maintain suitable space between the lower side of the buoy fixture and the valve housing.

2. The bottled water dispenser of claim 1, further comprising an air filter (79) formed on an upper side of the buoy fixture (78) for purifying air.

3. The bottled water dispenser of claim 1, further comprising:
an air filter (79) formed on an upper side of the buoy fixture (78) for purifying air; and
a filter supporter of a high elastic material fixed onto an upper side of the air filter and onto the valve housing (75) for fixing position of the air filter.

4. The bottled water dispenser of claim 1, wherein a sealing section (771) is formed on an upper side of the water shielding protrusion section (772).

5. The bottled water dispenser of claim 1, wherein the water shielding depression section (711) becomes wider downward, and further including a water shielding protrusion section (772) formed on a lower side of the interfix (773) to have a shape corresponding to the water shielding depression section for preventinig water from being leaked through the water shielding depression section.

6. The bottled water dispenser of claim 1, further comprising a first suspension section bent from a lower tip of the upper side water guide (4), and a second suspension section bent from a lower tip of the lower side water guide (7) to pull the lower side water guide when the upper side water guide (4) is pulled by the connector (8) due to suspension of the first suspension section.

7. The bottled water dispenser of claim 1, further comprising an internal sealing member (82) formed on an upper surface of the handle (81) for sealing the lower tip of the lower side water guide (7) and the handle.

8. The bottled water dispenser of claim 1, wherein the probe (84) is tapered to have shorter diameters upward so as to seal the gap between the water bottle (5) and the sealing outlet of the water bottle (5).

## Patentansprüche

1. Trinkwasserspender, umfassend:
eine Wasserflasche (5);
einen Vorratsbehälter (3), der mit Wasserauslässen (6, 85) verbunden ist;
einen Stütztrichter (41) zum Einsetzen einer Wasserflasche in ihn;
einen oberen Wasserführungshauptkörper (42), der an einer Unterseite des Stütztrichters ausgebildet ist;
eine obere Wasserführung (4) mit einem Schraubabschnitt (43, 83), der an einer Unterseite des Hauptkörpers (73) ausgebildet ist;
einen Wasservorratsbehälterbefestigungsabschnitt (71), der mit einem oberen Rand des Wasservorratsbehälters (3) an einem oberen Rand davon in Kontakt ist, zum Aufnehmen des oberen Wasserführungshauptkörpers (42) in ihm;
einen unteren Wasserführungshauptkörper, der an einer Unterseite des Wasservorratsbehälterbefestigungsabschnitts (71) ausgebildet ist;
einen Wasserdichtungsaussparungsabschnitt (711), der durch Penetration von einer vorbestimmten Position des Befestigungsabschnitts des Wasservorratsbehälters her zum Ansaugen von Luft von außerhalb ausgebildet ist;
einen Schwimmer (77), der mit einer Zwischenverbindung (773) einstückig ausgebildet ist, die in den Wasserdichtungsaussparungsabschnitt eingesetzt ist;
eine Schwimmerhalterung (78), die von der Zwischenverbindung befestigt und montiert ist;
eine Unterseite der Wasserführung (7) mit einem äußeren Dichtungselement (72), das zum Abdichten des Wasservorratsbehälters (3) und des Wasservorratsbefestigungsabschnitts (71) um einen äußeren Rand des Wasservorratsbehälterbefestigungsabschnitts (71) herum ausgebildet ist; und
einen Verbinder (8) mit einer Sonde (84), der einen Schraubabschnitt (43, 83) hat, der entsprechend dem Schraubabschnitt der oberen Wasserführung (4) zur Befestigung mit der oberen Wasserführung positioniert ist und länglich ist, so dass ein Deckel der Wasserflasche (5) geöffnet werden kann,
einen Griff (81), der an einem unteren Ende der Sonde (81, 84) zum Zusammendrücken mit einer äußeren Kraft ausgebildet ist, und von der geöffneten Sonde (84) gebildete Wasserauslässe (6, 85),
**dadurch gekennzeichnet, dass** er ferner Folgendes umfasst:
ein Ventilgehäuse (75) mit einer kreisförmigen Rahmengestalt, das sich vom Wasservorratsbehälterbefestigungsabschnitt (71) nach oben erstreckt, so dass die Schwimmerhalterung (78) geführt werden kann;
eine in einer vertikalen Richtung an einer inneren Umfangsfläche des Ventilgehäuses (75) verlaufende längliche Führungsrippe (751) und
an der Schwimmerhalterung (78) ausgebildete Zwischenraumhaltevorsprünge zum Erhalten eines geeigneten Zwischenraums zwischen der Unterseite der Schwimmerhalterung und dem Ventilgehäuse.

2. Trinkwasserspender nach Anspruch 1, der ferner einen auf einer oberen Seite der Schwimmerhalterung (78) ausgebildeten Luftfilter (79) zur Luftreinigung umfasst.

3. Trinkwasserspender nach Anspruch 1, der ferner Folgendes umfasst:
einen auf einer oberen Seite der Schwimmerhalterung (78) ausgebildeten Luftfilter (79) zur Luftreinigung und
einen Filterträger aus einem hochelastischen Material, der zum Fixieren der Lage des Luftfilters auf einer oberen Seite des Luftfilters und an dem Ventilgehäuse (75) befestigt ist.

4. Trinkwasserspender nach Anspruch 1, bei dem ein Dichtungsabschnitt (771) auf der oberen Seite des Wasserdichtungsvorsprungsabschnitts (772) ausgebildet ist.

5. Trinkwasserspender nach Anspruch 1, bei dem der Wasserdichtungsaussparungsabschnitt (711) nach unten breiter wird, und ferner mit einem Wasserdichtungsvorsprungsabschnitt (772), der an einer Unterseite der Zwischenverbindung (773) mit einer dem Wasserdichtungsvorsprungsabschnitt entsprechenden Gestalt ausgebildet ist, um zu verhüten, dass Wasser durch den Wasserdichtungsaussparungsabschnitt ausleckt.

6. Trinkwasserspender nach Anspruch 1, der ferner einen von einem unteren Rand der oberen Wasserführung (4) umgebogenen ersten Aufhängungsabschnitt und einen von einem unteren Rand der unteren Wasserführung (7) umgebogenen zweiten Aufhängungsabschnitt umfasst, um die untere Wasserführung zu ziehen, wenn die obere Wasserführung (4) vom Verbinder (8) aufgrund der Aufhängung des ersten Aufliängungsabschnitts gezogen wird.

7. Trinkwasserspender nach Anspruch 1, der ferner ein an einer Oberseite des Griffs (81) ausgebildetes Innendichtungselement (82) zum Abdichten des unteren Rands der unteren Wasserführung (7) und des Griffs aufweist.

8. Trinkwasserspender nach Anspruch 1, bei dem die Sonde (84) konisch zuläuft, so dass sie nach oben kleinere Durchmesser hat, um den Spalt zwischen der Wasserflasche (5) und dem Dichtungsauslass der Wasserflasche (5) abzudichten.

## Revendications

1. Distributeur d'eau embouteillée, comprenant :
une bouteille d'eau (5) ;
un réservoir de stockage (3) raccordé aux sorties d'eau (6, 85) ;
un entonnoir de support (41) pour insérer une bouteille d'eau à l'intérieur de celui-ci ;
un corps principal de guide d'eau côté supérieur (42) formé sur un côté inférieur de l'entonnoir de support ;
un guide d'eau côté supérieur (4) comportant une section de vis (43, 83), qui est formée sur un côté inférieur du corps principal (73) ;
une section de montage de réservoir de stockage d'eau (71) étant en contact avec une pointe supérieure du réservoir de stockage d'eau (3) au niveau d'une de ses pointes supérieures destinée à loger le corps principal de guide d'eau côté supérieur (42) à l'intérieur de celle-ci ;
un corps principal de guide d'eau côté inférieur formé sur un côté inférieur de la section de montage de réservoir de stockage d'eau (71) ;
une section de creux d'étanchéité à l'eau (711) formée en étant pénétrée depuis une position prédéterminée de la section de montage du réservoir de stockage d'eau pour aspirer l'air de l'extérieur ;
une bouée (77) intégrée avec un dispositif de fixation intermédiaire (773) inséré dans la section de creux d'étanchéité à l'eau ;
une fixation de bouée (78) fixée et montée par le dispositif de fixation intermédiaire ;
un côté inférieur du guide d'eau (7) comportant un élément d'étanchéité externe (72) formé autour d'une périphérie externe de la section de montage de réservoir de stockage d'eau (71) destiné à étanchéifier le réservoir de stockage d'eau (3) et la section de montage de stockage d'eau (71) ; et
un connecteur (8) comportant une sonde (84), qui présente une section de vis (43, 83) positionnée pour correspondre avec la section de vis du guide d'eau côté supérieur (4) de manière à être fixé au guide d'eau côté supérieur et allongé de sorte qu'un capuchon de la bouteille d'eau (5) peut être ouvert,
une poignée (81) formée sur une pointe inférieure de la sonde (81, 84) pour la compression avec une force externe, et des sorties d'eau (6, 85) formées par la sonde ouverte (84),
**caractérisé en ce qu'**il comprend en outre :
un boîtier de soupape (75) présentant une forme de cadre circulaire étendu vers le haut depuis la section de montage de réservoir de stockage d'eau (71) de sorte que la fixation de bouée (78) peut être guidée ;
une nervure de guidage (751) allongée dans une direction verticale sur une surface périphérique interne du boîtier de soupape (75) ; et
des protubérances de maintien d'espace formées sur la fixation de bouée (78) pour maintenir un espace approprié entre le côté inférieur de la fixation de bouée et le boîtier de soupape.

2. Distributeur d'eau embouteillée selon la revendication 1, comprenant en outre un filtre à air (79) formé sur un côté supérieur de la fixation de bouée (78) pour purifier l'air.

3. Distributeur d'eau embouteillée selon la revendication 1, comprenant en outre :
un filtre à air (79) formé sur un côté supérieur de la fixation de bouée (78) pour purifier l'air ; et
un support de filtre en matériau hautement élastique fixé sur un côté supérieur du filtre à air et sur le boîtier de soupape (75) pour fixer la position du filtre à air.

4. Distributeur d'eau embouteillée selon la revendication 1, dans lequel une section d'étanchéité (771) est formée sur un côté supérieur de la section de protubérance d'étanchéité à l'eau (772).

5. Distributeur d'eau embouteillée selon la revendication 1, dans lequel la section de creux d'étanchéité à l'eau (771) s'élargit vers le bas, et comporte en outre une section de protubérance d'étanchéité à l'eau (772) formée sur un côté inférieur du dispositif de fixation intermédiaire (773) pour présenter une forme correspondant à la section de creux d'étanchéité à l'eau destinée à empêcher l'eau de fuir à travers la section de creux d'étanchéité à l'eau.

6. Distributeur d'eau embouteillée selon la revendication 1, comprenant en outre une première section de suspension fléchie depuis une pointe inférieure du guide d'eau côté supérieur (4), et une seconde section de suspension fléchie depuis une pointe inférieure du guide d'eau côté inférieur (7) pour tirer le guide d'eau côté inférieur lorsque le guide d'eau côté supérieur (4) est tiré par le connecteur (8) en raison de la suspension de la première section de suspension.

7. Distributeur d'eau embouteillée selon la revendication 1, comprenant en outre un élément d'étanchéité interne (82) formé sur une surface supérieure de la poignée (81) pour étanchéifier la pointe inférieure du guide d'eau côté inférieur (7) et la poignée.

8. Distributeur d'eau embouteillée selon la revendication 1, dans lequel la sonde (84) est biseautée pour présenter des diamètres plus courts vers le haut de manière à étanchéifier l'espace entre la bouteille d'eau (5) et la sortie d'étanchéité de la bouteille d'eau (5).
